# FASCICULE DE BREVET EUROPEEN

(11) **EP 4 241 353 B1**
(45) Date de publication et mention de la délivrance du brevet: **01.01.2025**
(21) Numéro de dépôt: 21815242.9
(22) Date de dépôt: 05.11.2021
(51) Int. Cl.: H02H 3/33, H02H 3/347

(54) **DISPOSITIFS DE SURVEILLANCE ET DE PROTECTION DE CIRCUITS DE PUISSANCE**
VORRICHTUNGEN ZUR ÜBERWACHUNG UND ZUM SCHUTZ VON STROMKREISEN
DEVICES FOR MONITORING AND PROTECTING POWER CIRCUITS

(30) Priorité: 09.11.2020 FR 2011493
(43) Date de publication de la demande: 13.09.2023
(73) Titulaire: Safran Electrical & Power, 31702 Blagnac Cedex (FR)
(72) Inventeur: CHAPERON, Vincent, 31702 Blagnac Cedex (FR); ELMAALOUF, Damien, 31702 Blagnac Cedex (FR)
(74) Mandataire: Ernest Gutmann - Yves Plasseraud S.A.S.
(86) Numéro de dépôt international: PCT/FR2021/051955
(87) Numéro de publication internationale: WO 2022/096836

(56) Documents cités:
- EP-A2- 2 211 437
- CN-A- 109 672 431
- US-A- 3 525 019
- US-A1- 2019 190 247
- US-A1- 2019 341 213

## Description

### Domaine technique

La présente invention relève du domaine des dispositifs de surveillance et de protection de circuits de puissance commandés par des interrupteurs à contrôleurs de puissance à l'état solide ou à semi-conducteurs (solid state power controller en anglais), ci-après appelés SSPC et en particulier la protection contre les défauts de fuite de courant connue sous l'acronyme GFI pour Ground Fault Interrupt en anglais.

### Technique antérieure

Il est connu de réaliser des dispositifs triphasés pour lesquels chaque phase de puissance traverse un contrôleur de puissance à l'état solide pourvu d'un interrupteur pour interrompre ou laisser passer ladite phase vers un dispositif à alimenter et de faire traverser chacune desdites phases de puissance traversant un transformateur de détection de courant, le dispositif comportant un circuit de défaut à la terre recevant une sortie du transformateur de détection de courant, ledit circuit de défaut à la terre comprenant une sortie reliée à un module de surveillance pourvu d'un contrôleur ou processeur numérique dont une ou plusieurs sorties peuvent être utilisées pour envoyer au ou aux contrôleurs une commande de coupure des interrupteurs de puissance en cas de détection d'un défaut. Exemples de contrôleurs de puissance à l'état solide sont divulgués dans les documents CN 109672431, EP 2211437, US 3525019. **Problème technique**

Ces solutions connues permettent de détecter une fuite d'une phase ou un défaut d'isolement mais ne prévoient pas de distinguer plusieurs niveaux de courants de fuite à la terre. Par ailleurs, il est souhaitable de pouvoir vérifier le bon fonctionnement du circuit de mesure au niveau du transformateur de détection de courant pour garantir une détection correcte notamment dans le cas ou des individus peuvent être en contact avec les appareils pilotés par les SSPCs.

### Exposé de l'invention

Au vu de l'art antérieur la présente demande propose un dispositif de protection perfectionné comportant un moyen de test d'au moins une voie de mesure de courant de fuite.

Plus précisément la présente invention, telle que définie par les revendications indépendantes, concerne un dispositif de surveillance et de protection pour un équipement alimenté par au moins un contrôleur de puissance à l'état solide dit SSPC, ledit dispositif comportant au moins un circuit de mesure de courant comportant :
- un transformateur de mesure de courant recevant au primaire au moins les trois phases d'une alimentation triphasée de l'équipement ou la phase et le neutre d'une alimentation monophasée de l'équipement et pourvu au secondaire d'au moins un enroulement de mesure du courant au primaire,
- un module de mesure et de test comportant un contrôleur muni d'au moins une entrée analogique reliée audit enroulement de mesure par une voie de mesure pour mesurer un courant au secondaire Iₘ, représentatif d'un courant différentiel I_{d} au primaire et muni d'un programme de mesure et d'une voie numérique de communication avec ledit SSPC pour commander un interrupteur dudit SSPC au cas où ledit courant I_{d} dépasserait un seuil donné;
tel que ledit module comporte une voie d'injection de courant dans ledit transformateur, ladite voie comprenant un générateur de courant Iᵢₙⱼ piloté par une sortie du contrôleur et relié à un enroulement d'injection sur ledit transformateur, ledit enroulement d'injection comportant un nombre de spire Nᵢₙⱼ adapté pour que le courant Iᵢₙⱼ produise dans ledit enroulement de mesure un courant Iₘ de test dudit secondaire en l'absence de courant au primaire et ledit module comporte un programme de test adapté à piloter une injection de courant en parallèle à une mesure de courant.

La voie d'injection de l'invention permet de tester le bon fonctionnement de la ou des voies de mesure du dispositif, notamment lors d'un autotest du contrôleur de puissance à l'état solide.

Les caractéristiques ci-après correspondent à des modes de réalisation qui peuvent être mis en oeuvre de manière optionnelle indépendamment ou en combinaison selon le cas.

Selon un mode de réalisation avantageux, le dispositif comporte deux enroulements de mesure au secondaire, un premier enroulement de mesure étant adapté à une mesure d'un courant de fuite au primaire dans une plage 0 à 100 milliampères, un second enroulement de mesure étant adapté à une mesure d'un courant de fuite au primaire dans une plage de 0 à 2 Ampères.

Dans un premier mode de réalisation adapté à une mesure bas niveau sur une alimentation triphasée, le dispositif comporte trois modules SSPC, le transformateur est conçu pour recevoir les trois phases d'une alimentation triphasée issues desdits trois modules SSPC et le neutre de l'équipement, ledit courant au primaire I_{d} étant la somme vectorielle des courants desdites trois phases et du neutre et ledit contrôleur est programmé pour procéder à une ou plusieurs mesures de courant au moyen du premier enroulement de mesure et à commander la coupure des interrupteurs desdits trois modules SSPC sur détection d'un courant I_{dB} au primaire représentatif d'un seuil dit seuil GFI bas niveau de l'ordre de 20 milliampères à 40 milliampères.

Dans un deuxième mode de réalisation adapté à une mesure bas niveau sur une alimentation triphasée modifiée, le dispositif comporte trois modules SSPC, le transformateur est conçu pour recevoir les trois phases issues desdits trois modules SSPC et le neutre d'une alimentation triphasée de l'équipement, ledit courant au primaire Id est la somme vectorielle des courants desdites trois phases et du neutre, ledit contrôleur est programmé pour procéder à une mise en série desdits premier enroulement de mesure et second enroulement de mesure, réaliser une ou plusieurs mesures de courant au moyen du premier enroulement et du second enroulements en série et commander la coupure des interrupteurs desdits trois modules SSPC sur détection d'un courant I_{dB} au primaire représentatif d'un seuil dit seuil GFI bas niveau de l'ordre de 20 milliampères à 40 milliampères.

Dans un troisième mode de réalisation adapté à une mesure haut niveau sur une alimentation triphasée, le dispositif comporte trois modules SSPC, le transformateur est conçu pour recevoir les trois phases d'une alimentation triphasée de l'équipement issues desdits trois modules SSPC avec ou sans le neutre, ledit courant au primaire I_{d} est la somme vectorielle des courants desdites trois phases et pour lequel ledit contrôleur est programmé pour procéder à une ou plusieurs mesures de courant au moyen du second enroulement de mesure et à commander la coupure des interrupteurs desdits trois modules SSPC sur détection d'un courant I_{dH} au primaire supérieur à un seuil dit GFI haut niveau de l'ordre de 1 Ampère à 2 Ampères.

Dans un quatrième mode de réalisation adapté à une mesure bas niveau ou haut niveau sur une alimentation monophasée, le dispositif comporte un module SSPC, le transformateur est conçu pour recevoir la phase et le neutre d'une alimentation monophasée de l'équipement, ledit courant au primaire I_{d} est la différence du courant de phase et du courant de neutre et pour lequel ledit contrôleur est soit programmé pour procéder à une ou plusieurs mesures de courant au moyen du premier enroulement de mesure et à commander la coupure de l'interrupteurs du SSPC sur détection d'un courant I_{dB} au primaire représentatif d'un seuil dit seuil GFI bas niveau de l'ordre de 20 milliampères à 40 milliampères soit programmé pour procéder à une ou plusieurs mesures de courant au moyen du second enroulement de mesure, ou du premier et du second enroulements mis en série, et à commander la coupure de l'interrupteur du module SSPC sur détection d'un courant I_{dH} au primaire supérieur à un seuil dit GFI haut niveau de l'ordre de 1 Ampère à 2 Ampères.

Avantageusement pour obtenir une détection de courant aisée avec un bas niveau de courant injecté, le générateur de courant peut être configuré pour injecter un courant alternatif de fréquence d'une fréquence dix à cinquante fois plus élevée que la fréquence du courant commandé par le ou les SSPCs.

L'invention concerne en outre un procédé de mesure de courant au moyen d'un dispositif de l'invention qui comporte une séquence d'autotest pour laquelle au moins une injection de courant représentatif d'un ou plusieurs seuils de courant primaire donnés sur ledit enroulement d'injection et au moins une mesure des courants au niveau du ou des enroulements de mesure sont réalisée et en ce que le module de mesure et de test émet une commande de coupure des interrupteurs du ou des modules SSPC en cas de non détection d'un courant de mesure sur ledit ou lesdits enroulements de mesure.

Le procédé peut comporter après une séquence d'autotest des séquences de mesure de courant successives et l'émission par le module de mesure et de test d'une commande de coupure des interrupteurs des modules SSPC si le différentiel de courant des 3 phases fourni par les 3 voies des modules SSPC et le retour de neutre est supérieur à un seuil de 30mA pendant deux mesures de courant successives ou si la somme des courants des 3 phases d'alimentation est non nulle et supérieure à un niveau de courant défini pendant une période minimale définie.

Le procédé peut comporter, après une séquence d'autotest, des séquences de mesure de courant successives et l'émission par le module de mesure et de test d'une commande de coupure de l'interrupteur du module SSPC si le différentiel de courant entre phase et neutre est supérieur à un seuil défini pendant deux mesures de courant successives ou pendant une période minimale définie.

### Brève description des dessins

D'autres caractéristiques, détails et avantages de l'invention apparaîtront à la lecture de la description détaillée ci-après d'exemples de réalisation non limitatifs, et à l'analyse des dessins annexés, sur lesquels :
[Fig. 1] montre une vue schématique du dispositif objet de la description;
[Fig. 2A] montre un premier mode de réalisation;
[Fig. 2B] montre un second mode de réalisation;
[Fig. 3] montre une vue schématique d'un exemple de module SSPC de type connu;

### Description des modes de réalisation

Les dessins et la description ci-après contiennent des éléments pouvant non seulement servir à mieux faire comprendre la présente invention, mais aussi contribuer à sa définition, le cas échéant.

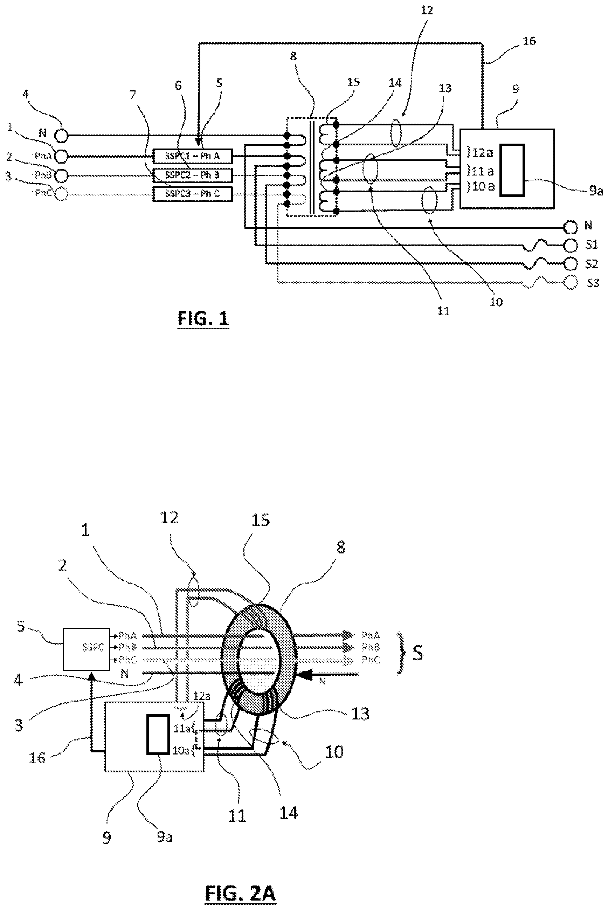

Il est maintenant fait référence à la figure 1 qui représente un dispositif électronique pourvu de trois entrées de phases 1, 2, 3 et une entrée de neutre 4, trois contrôleurs de puissance à l'état solide 5, 6, 7 chacun traversé par une phase, un transformateur de détection de courant 8 traversé par les trois phases et le neutre pour mesurer les déséquilibres de courant entre ces conducteurs et réaliser une mesure de courant différentielle, un module de mesure et de test 9 comportant un microcontrôleur 9a, des voies de mesure de tension 10, 11 et une voie d'injection de courant 12 chacune reliée à un enroulement 13, 14, 15 sur le transformateur 8 et de voies de commande schématisée par la liaison 16 pour permettre au module de mesure et de test de dialoguer avec le ou les SSPC 5, 6, 7.

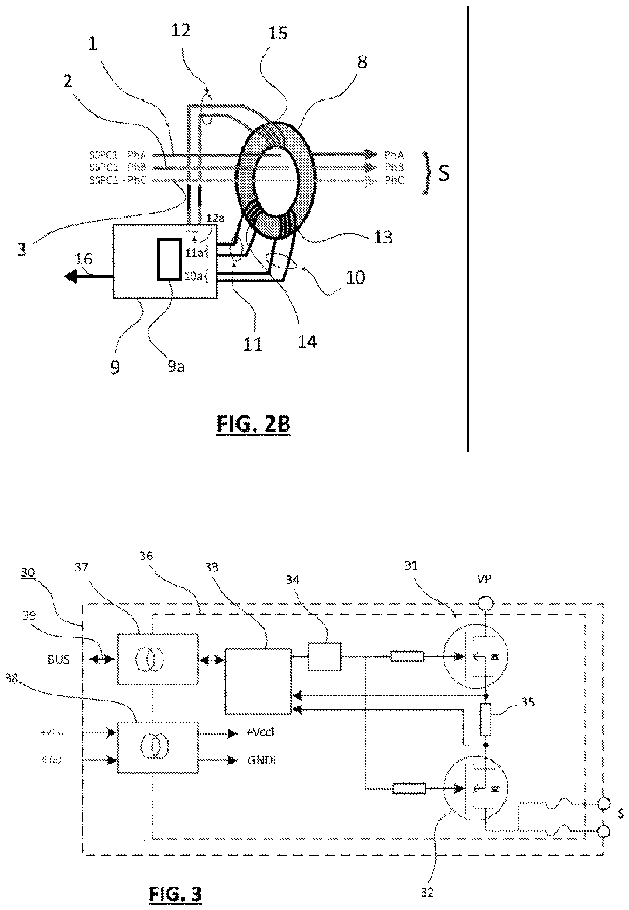

Un exemple de module SSPC 30 de type connu pour la commande d'une phase est schématisé en figure 3. Un tel module constitue un disjoncteur électronique statique piloté par un microcontrôleur 33. Ce disjoncteur est paramétrable afin de pouvoir s'adapter à des différentes configurations de câblage avion. Les paramètres comportent généralement des informations du type « calibre de protection I²t », « état par défaut », « consignation » et bien d'autres.

Le disjoncteur électronique statique est composé de deux MOSFET (acronyme anglais pour transistor à effet de champ à grille isolée) tête-bêche 31, 32 en courant alternatif mais peut comporter un seul MOSFET dans le cas d'un SSPC courant continu pour la partie interrupteur de puissance et du microcontrôleur 33 pour commander et surveiller l'évolution du courant de puissance traversant le SSPC de l'entrée VP à la sortie S en accord avec les paramètres de configuration reçus. Plusieurs fonctions de protection (I²T, Fonction mémoire Thermique) peuvent être gérées en parallèle par le microcontrôleur au travers d'une acquisition du courant traversant le SSPC effectuée par l'intermédiaire d'un shunt de mesure 35.

En cas de défaut détecté, le microcontrôleur 33 envoie un ordre de coupure au composant de pilotage 34 chargé de piloter la grille des MOSFETS de puissance. Le SSPS comporte une partie interne 36 isolée galvaniquement par des moyens d'isolation 37, 38 par rapport à un bus réseau 39 de l'aéronef 39 et une alimentation externe pour le microcontrôleur. L'entrée puissance VP ressort du SSPC après avoir traversé les MOSFETs.

Dans le cas d'une application triphasée, trois voies SSPC monophasées peuvent être regroupées pour former une seule voie SSPC triphasée capable de piloter des charges triphasées. Dans ce cas, un contrôleur amont et trois contrôleurs de canaux seront utilisés.

L'invention peut en outre s'appliquer à un interrupteur monophasé.

Dans le cadre de l'invention, il est nécessaire de prévoir deux sortes de protections selon le type d'équipement à commander.

Une première protection est une protection très sensible réalisant une interruption du circuit de puissance en cas de fuites à la terre. Cette protection ci-après GFI bas niveau (GFI étant l'acronyme en langue anglaise pour Ground Fault Interrupt) est réalisée par une protection différentielle d'une valeur programmable en général fixée à 30mA utilisant le retour de neutre pour être en mesure de comparer la somme vectorielle de courant des 3 phases aller et celle du retour de neutre. Il s'agit d'une protection des personnes par exemple en cas de défaut d'isolement d'un appareil.

Une seconde protection est une protection moins sensible appelée GFI haut niveau, par exemple pour les charges de type pompes hydrauliques, pour laquelle la somme vectorielle des courants des 3 phases et donc le courant de fuite de l'une ou l'autre des phases ne doit pas dépasser un seuil programmable généralement autour de 1.5A. Cette protection est une protection en cas de défaut à la terre sur une phase de l'appareil.

Ces deux types de protections permettent de couvrir les applications utilisant une fonction ou appareil électrifié dans un aéronef en contact avec un être humain. Elles sont généralisables à tout autre véhicule comportant des équipements électriques ou électroniques passagers, de divertissement ou de cuisine par exemple.

La présente description concerne un dispositif de surveillance et de protection adapté à réaliser l'un ou l'autre type de protection selon sa programmation et son câblage.

Selon la figure 2A, le dispositif est adapté pour réaliser une mesure de la somme vectorielle des courants des 3 phases venant du ou des SSPC 5 et du retour de neutre 4 pour réaliser la protection différentielle 30 mA (GFI bas niveau), Cette mesure est réalisée dans l'exemple au moyen d'enroulements secondaires 13, 14 reliés à des voies de mesure 10, 11 d'un module de mesure et de test 9 tel qu'un module à microcontrôleur 9a pourvu d'entrées de mesure analogiques 10a, 11a. Le transformateur de courant 8 reçoit les conducteurs de puissance 1, 2, 3 et le conducteur de neutre 4 de la charge triphasée alimentée au travers du SSPC. Pour ne pas accroître l'impédance au primaire, ces conducteurs peuvent ne faire qu'une boucle sur la ferrite torique du transformateur ou le traverser. Le nombre de spires des enroulements secondaires est déterminé pour obtenir une tension de sortie offrant un niveau de précision de mesure sur une échelle autour de 30 mA, par exemple une échelle 0 mA - 100 mA et fournir une très basse impédance ramenée au primaire.

Le choix d'utiliser deux enroulements secondaires est de permettre d'utiliser le même transformateur et le même montage pour la protection GFI haut niveau (courant de 1,5A). Pour cette protection, il faut faire la mesure de la somme vectorielle des courants des 3 phases. Dans ce cas le retour du neutre pourra éventuellement ne pas être câblé sur le transformateur de courant comme représenté en figure 2B. Cette mesure est alors réalisée au moyen d'un seul des enroulements secondaires 13 ou 14 au niveau d'une des voies de mesure 10 ou 11 et l'entrée analogique 10a ou 11a correspondante du module de mesure et de test 9. Le transformateur de courant 8 est uniquement traversé par les conducteurs de puissance 1, 2, 3 alimentant la charge triphasée alimentée au travers du SSPC. Le nombre de spires de l'enroulement secondaire considéré est déterminé pour obtenir une tension de sortie offrant un niveau de précision de mesure suffisant pour ne pas déclencher la protection intempestivement.

Pour fixer les idées, en considérant que les conducteurs de puissance sont enroulés sur une seule spire pour chaque phase et pour le neutre, sur la ferrite du transformateur torique 8 pour limiter l'impédance du transformateur au primaire, un premier enroulement secondaire de N1 spires permet de mesurer une plage de courant autour de 1,5 A. Avantageusement, cet enroulement mis en série avec un second enroulement secondaire de N2 spires permet de mesurer une plage de courant autour de 30mA . La mise en série des deux enroulements permet d'avoir un rapport de transformation plus faible. Par ailleurs, le shunt en sortie change selon si on utilise un enroulement ou deux.

Selon un aspect de la présente description, un moyen de test de ces fonctions de protection pour assurer un autotest au démarrage de la carte SSPC est réalisé.

Pour ce faire, l'invention propose d'utiliser une voie 12 d'injection d'un courant linj dans le transformateur de courant 8. Cette voie d'injection est adaptée à générer sur la charge de mesure au secondaire au niveau des voies de mesure 10, 11 un courant dans les enroulements secondaires fournissant une valeur de test. Il est à noter que la valeur de test est indépendante de la mesure de courant car le test se fait à une fréquence différente de la fréquence du courant d'alimentation de l'équipement. Pour ce faire la voie d'injection utilise une voie de sortie du module de mesure et de test 9, qui va piloter un générateur de courant ou un oscillateur fournissant un courant et un enroulement d'injection de courant sur le transformateur de courant. Cet enroulement comporte un nombre de spires Ninj adapté à fournir en sortie le courant équivalent à celui généré lors du défaut à détecter.

Pour générer le courant de test, il est par exemple possible d'utiliser le microcontrôleur pour piloter un mosfet connecté à une résistance pull up ou de faire osciller un amplificateur pout générer une source de courant. Par ailleurs, en utilisant un courant de fréquence élevée, par exemple de 10 à 50 fois la fréquence du courant d'alimentation de l'équipement et un nombre de spires élevé, le rapport de transformation étant très différent du rapport primaire secondaire, la fréquence de coupure du transformateur n'est pas la même qu'entre le primaire et le secondaire ce qui permet d'utiliser un faible courant.

Le courant injecté de faible intensité est injecté par un signal généré à une fréquence élevée pour ne pas surcharger la sortie du microcontrôleur générant le signal.

Par exemple, pour un transformateur de courant fonctionnant avec une fréquence au primaire de l'ordre de 400Hz à 800Hz, la fréquence du courant injecté sera de l'ordre de 8kHz à 20kHz et typiquement de 10kHz. Lors de l'injection de courant qui peut être réalisée lors de coupures du circuit puissance par le SSPC ou dans une séquence d'autotest circuit de puissance ouvert, le module de mesure et de test 9 vérifie les niveaux de courant présents sur les voies de mesure 10 et 11 pour en confirmer le bon fonctionnement.

Pour communiquer avec le ou les SSPC(s) le module de mesure et de test comporte une liaison bidirectionnelle 16 au travers de laquelle il peut recevoir une demande de test ou transmettre les résultats d'un test effectué de même que transmettre un ordre de coupure du circuit de puissance en cas de détection d'un défaut. Dans le cas où le test confirme la bonne marche du circuit de mesure, le module de mesure et de test autorise le ou les SSPC à fermer le circuit de puissance et dans les autres cas le module de mesure et de test commande au SSPC d'ouvrir ce circuit.

Il y a lieu de noter que le test ne peut être fait pendant la phase de fonctionnement.

La mesure peut par exemple comporter :
- Dans le cas d'une non utilisation du retour de neutre et si la somme des courants des 3 phases d'alimentation est non nulle et supérieure à un niveau de courant défini pendant un temps minimum défini de l'ordre de 5ms à 20ms alors la fonction d'interface carte pourra ouvrir les 3 voies SSPC pour assurer la protection GFI haut niveau.
- Dans le cas d'une utilisation du retour de neutre, la fonction d'interface carte assurera la protection GFI bas niveau en vérifiant si le différentiel de courant dans les 3 phases fourni par les 3 voies SSPC et le retour de neutre est supérieur à un seuil de 30mA pendant deux mesures de courant successives avec un pas dépendant de l'application et fonction de la fréquence d'échantillonnage du microcontrôleur.

Selon un test de démarrage de la carte (Power Up Built In Test selon la terminologie anglo-saxonne), la fonction d'interface carte procède à de l'injection de courant sur un secondaire du transformateur de courant pour tester les relectures de courant des deux protections GFI haut niveau et bas niveau.

Dans chaque cas, une valeur de courant prenant en compte la résistance shunt en sortie du transformateur à contrôler est injectée par une source de courant à une fréquence supérieure, afin de procéder à la relecture de l'enroulement de protection. Cette source est pilotée par le microcontrôleur de la fonction de protection et non par les voies SSPC.

L'invention ne se limite pas aux exemples décrits ci-avant, seulement à titre d'exemple, mais elle englobe toutes les variantes que pourra envisager l'homme de l'art dans le cadre de la protection recherchée. En particulier, les courants de seuil peuvent être différents de même que les voies de mesure peuvent être totalement séparées.

## Revendications

1. Dispositif de surveillance et de protection pour un équipement alimenté par au moins un contrôleur de puissance à l'état solide dit SSPC (5, 6, 7), ledit dispositif comportant au moins un circuit de mesure de courant **caractérisé en ce qu'**il comporte:
- un transformateur (8) de mesure de courant recevant au primaire au moins les trois phases (1, 2, 3) d'une alimentation triphasée de l'équipement ou la phase et le neutre d'une alimentation monophasée de l'équipement et pourvu au secondaire d'au moins deux enroulements (13, 14) de mesure du courant au primaire,
- un module (9) de mesure et de test comportant un contrôleur de mesure et de test (9a) muni d'au moins une entrée analogique (10a, 11a) reliée à au moins un desdits enroulement de mesure (13, 14) par une voie de mesure (10, 11) pour mesurer un courant au secondaire Iₘ, représentatif d'un courant différentiel I_{d} au primaire et muni d'un programme de mesure et d'une voie numérique (16) de communication avec ledit SSPC pour commander un interrupteur dudit SSPC au cas où ledit courant I_{d} dépasserait un seuil donné;
pour lequel ledit module (9) comporte une voie d'injection de courant dans ledit transformateur, ladite voie comprenant un générateur de courant Iᵢₙⱼ piloté par une sortie du contrôleur de mesure et de test (9a) et relié à un enroulement d'injection (15) sur ledit transformateur, ledit enroulement d'injection comportant un nombre de spire Nᵢₙⱼ adapté pour que le courant Iᵢₙⱼ produise dans lesdits enroulements de mesure (13, 14) un courant Iₘ de test dudit secondaire en l'absence de courant au primaire
**caractérisé en ce que**, ledit module (9) comporte
un programme de test adapté à piloter une injection de courant en parallèle à une mesure de courant ;
et pour lequel lesdits deux enroulements de mesure (13, 14) au secondaire sont tels qu'un premier enroulement de mesure (13) est adapté à une mesure d'un courant de fuite au primaire dans une plage 0 à 100 milliampères et un second enroulement de mesure (14) est adapté à une mesure d'un courant de fuite au primaire dans une plage de 0 à 2 Ampères.

2. Dispositif de surveillance et de protection selon la revendication 1 pour lequel le dispositif comporte trois modules SSPC, le transformateur recevant les trois phases d'une alimentation triphasée issues desdits trois modules SSPC et le neutre de l'équipement, ledit courant au primaire I_{d} est la somme vectorielle des courants desdites trois phases et du neutre et pour lequel ledit contrôleur est programmé pour procéder à une ou plusieurs mesures de courant au moyen du premier enroulement de mesure et à commander la coupure des interrupteurs desdits trois modules SSPC sur détection d'un courant I_{dB} au primaire représentatif d'un seuil dit seuil GFI bas niveau de l'ordre de 20 milliampères à 40 milliampères.

3. Dispositif de surveillance et de protection selon la revendication 1 pour lequel le dispositif comporte trois modules SSPC, le transformateur est conçu pour recevoir les trois phases issues desdits trois modules SSPC et le neutre d'une alimentation triphasée de l'équipement, ledit courant au primaire I_{d} étant la somme vectorielle des courants desdites trois phases et du neutre, ledit contrôleur est programmé pour procéder à une mise en série desdits premier enroulement de mesure et second enroulement de mesure, réaliser une ou plusieurs mesures de courant au moyen du premier enroulement et du second enroulements en série et commander la coupure des interrupteurs desdits trois modules SSPC sur détection d'un courant I_{dB} au primaire représentatif d'un seuil dit seuil GFI bas niveau de l'ordre de 20 milliampères à 40 milliampères.

4. Dispositif de surveillance et de protection selon la revendication 1 pour lequel le dispositif comporte trois modules SSPC, le transformateur est conçu pour recevoir les trois phases d'une alimentation triphasée de l'équipement issues desdits trois modules SSPC avec ou sans le neutre, ledit courant au primaire I_{d} est la somme vectorielle des courants desdites trois phases et pour lequel ledit contrôleur est programmé pour procéder à une ou plusieurs mesures de courant au moyen du second enroulement de mesure et à commander la coupure des interrupteurs desdits trois modules SSPC sur détection d'un courant I_{dH} au primaire supérieur à un seuil dit GFI haut niveau de l'ordre de 1 Ampère à 2 Ampères.

5. Dispositif de surveillance et de protection selon la revendication 1 pour lequel le dispositif comporte un module SSPC, le transformateur est conçu pour recevoir la phase et le neutre d'une alimentation monophasée de l'équipement, pour lequel ledit courant au primaire I_{d} est la différence du courant de phase et du courant de neutre et pour lequel ledit contrôleur est soit programmé pour procéder à une ou plusieurs mesures de courant au moyen du premier enroulement de mesure et à commander la coupure de l'interrupteurs du SSPC sur détection d'un courant I_{dB} au primaire représentatif d'un seuil dit seuil GFI bas niveau de l'ordre de 20 milliampères à 40 milliampères soit programmé pour procéder à une ou plusieurs mesures de courant au moyen du second enroulement de mesure, ou du premier et du second enroulements mis en série, et à commander la coupure de l'interrupteur du module SSPC sur détection d'un courant I_{dH} au primaire supérieur à un seuil dit GFI haut niveau de l'ordre de 1 Ampère à 2 Ampères.

6. Dispositif de surveillance et de protection selon l'une quelconque des revendications précédentes pour lequel le générateur de courant est configuré pour injecter un courant alternatif de fréquence d'une fréquence dix à cinquante fois plus élevée que la fréquence du courant commandé par le ou les SSPCs.

7. Procédé de mesure de courant au moyen d'un dispositif de l'une quelconque des revendications précédentes **caractérisé en ce qu'**il comporte une séquence d'autotest pour laquelle au moins une injection de courant représentatif d'un ou plusieurs seuils de courant primaire donnés sur ledit enroulement d'injection, pour laquelle une mesure des courants au niveau de chacun desdits premier enroulement de mesure et second enroulement de mesure est réalisé et **en ce que** le module de mesure et de test émet une commande de coupure des interrupteurs du ou des modules SSPC en cas de non détection d'un courant de mesure sur au moins l'un ou l'autre desdits premier enroulement de mesure et second enroulement de mesure lors de ladite injection de courant.

8. Procédé selon la revendication 7 appliqué au dispositif de la revendication 2 ou 3, **caractérisé en ce qu'**il comporte après la séquence d'autotest, des séquences de mesure de courant successives et l'émission par le module de mesure et de test d'une commande de coupure des interrupteurs des modules SSPC si le différentiel de courant des 3 phases fourni par les 3 voies des modules SSPC et le retour de neutre est supérieur à un seuil de 30mA pendant deux mesures de courant successives ou si la somme des courants des 3 phases d'alimentation est non nulle et supérieure à un niveau de courant défini pendant une période minimale définie.

9. Procédé selon la revendication 7 appliqué au dispositif de la revendication 5, comportant, après la une séquence d'autotest des séquences de mesure de courant successives et l'émission par le module de mesure et de test d'une commande de coupure de l'interrupteur du module SSPC si le différentiel de courant entre phase et neutre est supérieur à un seuil défini pendant deux mesures de courant successives ou pendant une période minimale définie.

## Patentansprüche

1. Überwachungs- und Schutzvorrichtung für eine Anlage, die über zumindest einen Festkörper-Leistungsregler, SSPC genannt, (5, 6, 7) versorgt wird, wobei die Vorrichtung zumindest einen Strommesskreis aufweist, **dadurch gekennzeichnet, dass** sie umfasst:
- einen Transformator (8) zur Strommessung, der auf der Primärseite zumindest die drei Phasen (1, 2, 3) einer dreiphasigen Versorgung der Anlage oder die Phase und den Neutralleiter einer einphasigen Versorgung der Anlage aufnimmt und auf der Sekundärseite mit zumindest zwei Wicklungen (13, 14) zur Strommessung auf der Primärseite versehen ist,
- ein Mess- und Prüfmodul (9) mit einer Mess- und Prüfsteuerung (9a), die mit zumindest einem analogen Eingang (10a, 11a) versehen ist, der über einen Messpfad (10, 11) mit zumindest einer der Messwicklungen (13, 14) verbunden ist, um einen Strom auf der Sekundärseite Iₘ zu messen, der für einen Differenzstrom I_{d} auf der Primärseite repräsentativ ist, und die mit einem Messprogramm und einem digitalen Kommunikationspfad (16) zur Kommunikation mit dem SSPC versehen ist, um einen Schalter des SSPC anzusteuern, falls der Strom I_{d} einen gegebenen Schwellenwert überschreitet;
wobei das Modul (9) einen Pfad zur Stromeinspeisung in den Transformator umfasst, wobei der Pfad einen Stromgenerator Iᵢₙⱼ umfasst, der über einen Ausgang der Mess- und Prüfsteuerung (9a) angesteuert wird und mit einer Einspeisungswicklung (15) am Transformator verbunden ist, wobei die Einspeisungswicklung eine Anzahl von Windungen Nᵢₙⱼ umfasst, die so ausgelegt ist, dass der Strom Iᵢₙⱼ in den Messwicklungen (13, 14) einen Prüfstrom Iₘ zum Prüfen der Sekundärseite bei Ausbleiben eines Stroms auf der Primärseite erzeugt,
**dadurch gekennzeichnet, dass** das Modul (9) ein Prüfprogramm umfasst, das geeignet ist, eine Stromeinspeisung parallel zu einer Strommessung zu steuern;
und wobei die beiden Messwicklungen (13, 14) auf der Sekundärseite so ausgebildet sind, dass eine erste Messwicklung (13) für eine Messung eines Leckstroms auf der Primärseite in einem Bereich von 0 bis 100 Milliampere geeignet ist und eine zweite Messwicklung (14) für eine Messung eines Leckstroms auf der Primärseite in einem Bereich von 0 bis 2 Ampere geeignet ist.

2. Überwachungs- und Schutzvorrichtung nach Anspruch 1,
wobei die Vorrichtung drei SSPC-Module umfasst, wobei der Transformator die drei Phasen einer dreiphasigen Versorgung aus den drei SSPC-Modulen und den Neutralleiter der Anlage aufnimmt, wobei der Strom I_{d} auf der Primärseite die Vektorsumme der Ströme der drei Phasen und des Neutralleiters ist und wobei die Steuerung dazu programmiert ist, eine oder mehrere Strommessungen mithilfe der ersten Messwicklung durchzuführen und die Abschaltung der Schalter der drei SSPC-Module bei Erfassung eines Stroms I_{dB} auf der Primärseite zu steuern, der repräsentativ für einen Schwellenwert, GFI-Schwellenwert mit niedrigem Pegel genannt, in der Größenordnung von 20 Milliampere bis 40 Milliampere ist.

3. Überwachungs- und Schutzvorrichtung nach Anspruch 1,
wobei die Vorrichtung drei SSPC-Module umfasst, wobei der Transformator dazu ausgelegt ist, die drei Phasen aus den drei SSPC-Modulen und den Neutralleiter einer dreiphasigen Versorgung der Anlage aufzunehmen, wobei der Strom I_{d} auf der Primärseite die Vektorsumme der Ströme der drei Phasen und des Neutralleiters ist, wobei die Steuerung dazu programmiert ist, die erste Messwicklung und die zweite Messwicklung in Reihe zu schalten, eine oder mehrere Strommessungen mittels der ersten Wicklung und der zweiten Wicklung in Reihe durchzuführen und die Abschaltung der Schalter der drei SSPC-Module bei Erfassung eines Stroms I_{dB} auf der Primärseite zu steuern, der repräsentativ für einen Schwellenwert ist, GFI-Schwellenwert mit niedrigem Pegel genannt, in der Größenordnung von 20 Milliampere bis 40 Milliampere ist.

4. Überwachungs- und Schutzvorrichtung nach Anspruch 1,
wobei die Vorrichtung drei SSPC-Module umfasst, wobei der Transformator dazu ausgelegt ist, die drei Phasen einer dreiphasigen Versorgung der Anlage aus den drei SSPC-Modulen mit oder ohne den Neutralleiter aufzunehmen, wobei der Strom I_{d} auf der Primärseite die Vektorsumme der Ströme der drei Phasen ist und wobei die Steuerung dazu programmiert ist, eine oder mehrere Strommessungen mittels der zweiten Messwicklung durchzuführen und die Abschaltung der Schalter der drei SSPC-Module bei Erfassung eines Stroms I_{dH} auf der Primärseite zu steuern, der über einem Schwellenwert, GFI mit hohen Pegel genannt, in der Größenordnung von 1 Ampere bis 2 Ampere liegt.

5. Überwachungs- und Schutzvorrichtung nach Anspruch 1,
wobei die Vorrichtung ein SSPC-Modul umfasst, wobei der Transformator dazu ausgelegt ist, die Phase und den Neutralleiter einer einphasigen Versorgung der Anlage aufzunehmen, wobei der Strom I_{d} auf der Primärseite die Differenz des Phasenstroms und des Neutralleiterstroms ist und wobei die Steuerung entweder dazu programmiert ist, eine oder mehrere Strommessungen mittels der ersten Messwicklung durchzuführen und die Abschaltung des Schalters des SSPC bei Erfassung eines Stroms I_{dB} auf der Primärseite zu steuern, der repräsentativ für einen Schwellenwert, GFI-Schwellenwert mit niedrigem Pegel genannt, in der Größenordnung von 20 Milliampere bis 40 Milliampere ist, oder dazu programmiert ist, eine oder mehrere Strommessungen mittels der zweiten Messwicklung oder der in Reihe geschalteten ersten und zweiten Wicklung durchzuführen und die Abschaltung des Schalters des SSPC-Moduls bei Erfassung eines Stroms I_{dH} auf der Primärseite zu steuern, der höher ist als ein Schwellenwert, GFI mit hohem Pegel genannt, in der Größenordnung von 1 Ampere bis 2 Ampere.

6. Überwachungs- und Schutzvorrichtung nach einem der vorhergehenden Ansprüche,
wobei der Stromgenerator dazu ausgelegt ist, einen Wechselstrom mit einer Frequenz einzuspeisen, die zehn bis fünfzig Mal höher ist als die Frequenz des Stroms, der von dem oder den SSPCs gesteuert wird.

7. Verfahren zur Strommessung mittels einer Vorrichtung nach einem der vorhergehenden Ansprüche,
**dadurch gekennzeichnet, dass** es eine Selbsttestsequenz umfasst, bei der zumindest eine Stromeinspeisung erfolgt, die für einen oder mehrere gegebene Stromschwellenwerte auf der Primärseite an der Einspeisungswicklung repräsentativ ist, wobei eine Strommessung jeweils an der ersten Messwicklung und der zweiten Messwicklung durchgeführt wird, und dass das Mess- und Prüfmodul einen Befehl zum Abschalten der Schalter des oder der SSPC-Module ausgibt, wenn bei der Stromeinspeisung kein Messstrom an zumindest der einen oder der anderen der ersten Messwicklung und der zweiten Messwicklung erfasst wird.

8. Verfahren nach Anspruch 7, das mit der Vorrichtung nach Anspruch 2 oder 3 durchgeführt wird,
**dadurch gekennzeichnet, dass** es nach der Selbsttestsequenz aufeinanderfolgende Strommesssequenzen und die Ausgabe eines Befehls durch das Mess- und Prüfmodul zur Abschaltung der Schalter der SSPC-Module umfasst, wenn die Stromdifferenz der 3 Phasen, die von den 3 Pfaden der SSPC-Module und der Neutralleiterrückführung bereitgestellt wird, während zwei aufeinanderfolgenden Strommessungen einen Schwellenwert von 30 mA überschreitet oder wenn die Summe der Ströme der 3 Versorgungsphasen ungleich Null ist und während einer festgelegten Mindestdauer einen festgelegten Strompegel überschreitet.

9. Verfahren nach Anspruch 7, das mit der Vorrichtung nach Anspruch 5 durchgeführt wird,
umfassend nach der einen Selbsttestsequenz aufeinanderfolgende Strommesssequenzen und die Ausgabe eines Befehls durch das Mess- und Prüfmodul zur Abschaltung des Schalters des SSPC-Moduls, wenn die Stromdifferenz zwischen Phase und Neutralleiter während zwei aufeinanderfolgenden Strommessungen oder während einer festgelegten Mindestdauer einen festgelegten Schwellenwert überschreitet.

## Claims

1. A device for monitoring and protecting equipment powered by at least one solid-state power controller called SSPC (5, 6, 7), said device including at least one current measurement circuit **characterised in that** it includes:
- a current measuring transformer (8) receiving at the primary at least the three phases (1, 2, 3) of a three-phase power supply of the equipment or the phase and the neutral of a single-phase power supply of the equipment and provided at the secondary with at least two windings (13, 14) for measuring the current at the primary,
- a measuring and testing module (9) including a measuring and testing controller (9a) provided with at least one analog input (10a, 11a) connected to at least one of said measurement windings (13, 14) by a measurement channel (10, 11) for measuring a current at the secondary Iₘ, representative of a differential current I_{d} at the primary and provided with a measurement program and a digital channel (16) for communication with said SSPC for controlling a switch of said SSPC in the event that said current I_{d} exceeds a given threshold;
wherein said module (9) includes a channel for injecting current into said transformer, said channel comprising a current Iᵢₙⱼ generator controlled by an output of the measuring and testing controller (9a) and connected to an injection winding (15) on said transformer, said injection winding including a number of turns Nᵢₙⱼ adapted so that the current Iᵢₙⱼ produces in said measurement windings (13, 14) a test current Iₘ of said secondary in the absence of current at the primary **characterized in that** said module (9) includes a test program adapted to control a current injection in parallel with a current measurement;
and wherein said two measurement windings (13, 14) at the secondary are such that a first measurement winding (13) is adapted for a measurement of a leakage current at the primary in a range 0 to 100 milliamps and a second measurement winding (14) is adapted for a measurement of a leakage current at the primary in a range of 0 to 2 amps.

2. The monitoring and protection device according to claim 1, wherein the device includes three SSPC modules, the transformer receiving the three phases of a three-phase power supply derived from said three SSPC modules and the neutral of the equipment, said current at the primary I_{d} is the vector sum of the currents of said three phases and of the neutral and wherein said controller is programmed to proceed with one or more current measurement(s) by means of the first measurement winding and order the switching off of the switches of said three SSPC modules on detection of a current I_{dB} at the primary representative of a threshold called low-level GFI threshold in the range of 20 milliamps to 40 milliamps.

3. The monitoring and protection device according to claim 1, wherein the device includes three SSPC modules, the transformer is designed to receive the three phases derived from said three SSPC modules and the neutral of a three-phase power supply of the equipment, said primary current I_{d} being the vector sum of the currents of said three phases and of the neutral, said controller is programmed to proceed with a serial connection of said first measurement winding and second measurement winding, carry out one or more current measurement(s) by means of the first winding and the second winding in series and order the switching off of the switches of said three SSPC modules on detection of a current I_{dB} at the primary representative of a threshold called low-level GFI threshold in the range of 20 milliamps to 40 milliamps.

4. The monitoring and protection device according to claim 1, wherein the device includes three SSPC modules, the transformer is designed to receive the three phases of a three-phase power supply of the equipment derived from said three SSPC modules with or without the neutral, said primary current I_{d} is the vector sum of the currents of said three phases and wherein said controller is programmed to proceed with one or more current measurement(s) by means of the second measurement winding and order the switching off of the switches of said three SSPC modules on detection of a current I_{dH} at the primary higher than a so-called high-level GFI threshold in the range of 1 amp to 2 amps.

5. The monitoring and protection device according to claim 1, wherein the device includes an SSPC module, the transformer is designed to receive the phase and the neutral of a single-phase power supply of the equipment, wherein said current at the primary I_{d} is the difference between the phase current and the neutral current and wherein said controller is either programmed to proceed with one or more current measurement(s) by means of the first measurement winding and order the switching off of the switches of the SSPC on detection of a current I_{dB} at the primary representative of a so-called low-level GFI threshold in the range of 20 milliamps to 40 milliamps or programmed to proceed with one or more current measurement(s) by means of the second measurement winding, or of the first and second winding(s) connected in series, and order the switching off of the switch of the SSPC module on detection of a current I_{dH} at the primary higher than a so-called high-level GFI threshold in the range of 1 amp to 2 amps.

6. The monitoring and protection device according to any one of the preceding claims, wherein the current generator is configured to inject an alternating current with a frequency of ten to fifty times higher than the frequency of the current controlled by the SSPC(s).

7. A method for measuring current by means of a device of any one of the preceding claims, **characterised in that** it includes a self-test sequence for which at least one injection of current representative of one or more given primary current threshold(s) on said injection winding, for which a measurement of the currents at each of said first measurement winding and second measurement winding is carried out and **in that** the measuring and testing module emits an order for switching off the switches of the SSPC module(s) in case of nondetection of a measurement current on at least either one of said first measurement winding and second measurement winding during said current injection.

8. The method according to claim 7 applied to the device of claim 2 or 3, **characterised in that** it includes, after the self-test sequence, successive current measurement sequences and the emission by the measuring and testing module of an order for switching off the switches of the SSPC modules if the current differential of the 3 phases supplied by the 3 channels of the SSPC modules and the neutral return is higher than a 30mA threshold during two successive current measurements or if the sum of the currents of the 3 supply phases is non-zero and higher than a defined current level for a defined minimum period.

9. The method according to claim 7 applied to the device of claim 5, including, after a self-test sequence, successive current measurement sequences and the emission by the measuring and testing module of an order for switching off the switches of the SSPC modules if the current differential between the phase and the neutral is higher than a defined threshold for two successive current measurements or for a defined minimum period.
